# EUROPÄISCHE PATENTSCHRIFT

(11) **EP 0 771 497 B1**
(45) Veröffentlichungstag und Bekanntmachung des Hinweises auf die Patenterteilung: **02.09.1998**
(21) Anmeldenummer: 95927680.9
(22) Anmeldetag: 20.07.1995
(51) Int. Cl.: H04L 5/06, H04H 3/00

(54) **MEHRTRÄGERÜBERTRAGUNG IN GLEICHWELLENNETZEN**
MULTIPLE CARRIER TRANSMISSION IN COMMON WAVE BROADCASTING NETWORKS
TRANSMISSION PAR PORTEUSES MULTIPLES DANS DES RESEAUX DE TRANSMISSION SUR ONDE COMMUNE

(30) Priorität: 20.07.1994 DE 4425713
(43) Veröffentlichungstag der Anmeldung: 07.05.1997
(73) Patentinhaber: KONLE, Tilmar, 81247 München (DE)
(72) Erfinder: WECK, Christfried, D-84072 Au i.d. Hallertau (DE)
(86) Internationale Anmeldenummer: EP9502868
(87) Internationale Veröffentlichungsnummer: WO9602989

(56) Entgegenhaltungen:
- RUNDFUNKTECHNISCHE MITTEILUNGEN, Bd. 38, Nr. 1, Januar 1994 NORDERSTEDT DE, Seiten 14-23, BRUGGER 'DAB - Gleichwellennetze bei 1,5GHz'
- SIGNAL PROCESSING IMAGE COMMUNICATION., Bd. 5, Nr. 5/6, Dezember 1993 AMSTERDAM NL, Seiten 379-403, TOURTIER ET AL. 'Multicarrier modem for digital HDTV terrestrial broadcasting'
- IEEE TRANSACTIONS ON CONSUMER ELECTRONICS, Bd. 35, Nr. 3, August 1989 NEW YORK, US, Seiten 493-503, LE FLOCH ET AL 'DIGITAL SOUND BROADCASTING TO MOBILE RECEIVERS'

## Beschreibung

Die Erfindung bezieht sich auf ein Verfahren zur Vielträgermodulation von digital codierten Daten gemäß Patentanspruch 1 sowie auf ein Verfahren zur Vielträger Demodulation von derart modulierten Signalen gemäß Patentanspruch 3. Verfahren dieser Art sind aus der FR-A-2 639 495 bekannt.

Das Dokument «RUNDFUNKTECHNISCHE MITTEILUNGEN, Bd. 38, Nr. 1, Januar 1994, Norderstedt, DE, Seiten 14 bis 23, R. BRUGGER: "DAB-Gleichwellennetze bei 1,5 GHz"» widmet sich ebenfalls der Vielträgermodulation und beleuchtet die Probleme bei Gleichwellennetzen unter Berücksichtigung von Schutzintervallen und Symbollängen als Systemparametern.

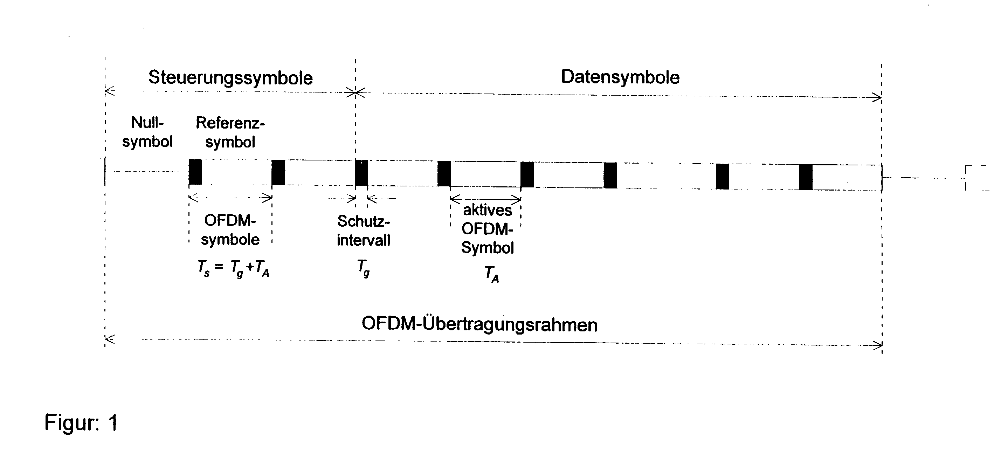

Bei der bekannten Vielträger Modulation (Orthogonal Frequency Divison Multiplex-Modulation, abgekürzt OFDM-Modulation) nach der FR-A-2 639 495 wird eine zeitliche Folge von OFDM-Symbolen mittels Fourier-Synthese von vielen, mit digital codierten Daten modulierten Trägern erzeugt. Die OFDM-Symbole werden in aufeinanderfolgende OFDM-Übertragungsrahmen strukturiert, welche beispielsweise durch ein Nullsymbol voneinander getrennt werden (Figur 1). Jeder OFDM-Übertragungsrahmen besteht aus einem Rahmenkopf mit einem oder mehreren Steuerungssymbolen und einem darauffolgenden Nutzdatenbereich mit einer Vielzahl von Datensymbolen. Die Steuerungssymbole dienen im OFDM-Decoder zur zeitlich richtigen Erkennung des Anfangs jedes empfangenen OFDM-Übertragungsrahmens und OFDM-Symbols sowie zur Rückgewinnung der exakten Modulations-Trägerfrequenzen nach Betrag und Phase. Zwischen aufeinanderfolgenden OFDM-Symbolen (Steuerungs- und Datensymbole) wird modulatorseitig jeweils ein Schutzintervall vorgesehen. Aufgrund des Schutzintervalls läßt demodulatorseitig ein Übersprechen von aufeinanderfolgenden OFDM-Symbolen aufgrund einer Mehrwegeausbreitung vermeiden. Die zeitliche Länge der Schutzintervalle für alle OFDM-Symbole in Rahmenkopf und im Nutzdatenbereich jedes OFDM-Übertragungsrahmens ist dabei gleich.

Es hat sich jedoch gezeigt, daß bei Auftreten großer Laufzeitunterschiede an einem Empfangsort insbesondere in Gleichwellennetzen die Schutzintervalle mit relativ langer

Dauer bemessen werden müssen, um eine Übersprechen zwischen aufeinanderfolgenden OFDM-Symbolen sicher zu vermeiden. Als Folge einer derart langen Dauer der Schutzintervalle verringert sich die Nutzsignalkapazität bzw. die Übertragungseffizienz. Eine Abhilfemöglichkeit hierfür könnte darin bestehen, mit einer Vergrößerung der Länge der Schutzintervalle auch die zeitliche Länge der Nutzintervalle im selben Maße zu vergrößern. Damit wird jedoch der demodulatorseitige Aufwand beträchtlich vergrößert. Und zwar werden die Anforderungen an die Genauigkeit der Abtastung der OFDM-Datensymbole, an den Umfang der zu speichernden Abtastwerte sowie an den Rechenaufwand für die Frequenzanalyse des durch die Abtastwerte gegebenen Zeitsignals überproportional vergrößert. Ein gewähltes Schutzintervall für ein OFDM-Modulationssystem stellt daher einen Kompromiß dar, bei dem Abstriche in der Übertragungskapazität, dem Empfängeraufwand und der Frequenzeffizienz unter netzplanerischen Gesichtspunkten in Kauf zu nehmen sind.

Die Aufgabe der Erfindung besteht demgegenüber darin, eine Reduzierung der Nutzsignalkapazität in der Mehrzahl der Anwendungsfälle zu vermeiden und gleichzeitig auch den Fall eines Gleichwellennetzes mit großer Flächenausdehnung zu berücksichtigen.

Diese Aufgabe wird erfindungsgemäß duch die kennzeichnenden Merkmale der nebengeordneten Ansprüche 1 und 3 gelöst.

Die Erfindung beruht auf der Erkenntnis, daß große Schutzintervalle nicht bei allen Rundfunkdiensten nötig sind. Beispielsweise ergeben sich Unterschiede bei lokalen, regionalen und nationalen Netzstrukturen. Am kritischsten ist die Versorgung großer Flächen in einem Gleichwellenbetrieb. Ausgehend von dieser Erkenntnis besteht die erfindungsgemäße Überlegung darin, nur die Schutzintervalle für den Rahmenkopf jedes OFDM-Übertragungsrahmens auf den denkbar schlechtesten Anwendungsfall auszulegen und die Schutzintervalle für die OFDM-Symbole des Nutzdatenbereichs jedes OFDM-übertragungsrahmens je nach den tatsächlich auftretenden Laufzeitunterschieden in einem betrachteten Netz auszulegen.

Die Erfindung wird nachstehend anhand der Zeichnungen näher erläutert.

Es zeigt:
- Fig. 1: einen schematischen Aufbau eines OFDM-Übertragungsrahmens nach dem Stand der Technik;
- Fig. 2: drei Beispiele eines schematischen Aufbaus eines OFDM-Übertragungsrahmens nach der Erfindung;
- Fig. 3: ein Blockschaltbild eines OFDM-Modulators zur Erzeugung eines OFDM-Übertragungsrahmens nach Fig. 2, und
- Fig. 4: ein Blockschaltbild eines OFDM-Demodulators zur Demodulation eines OFDM-Übertragungsrahmens nach Fig. 2.

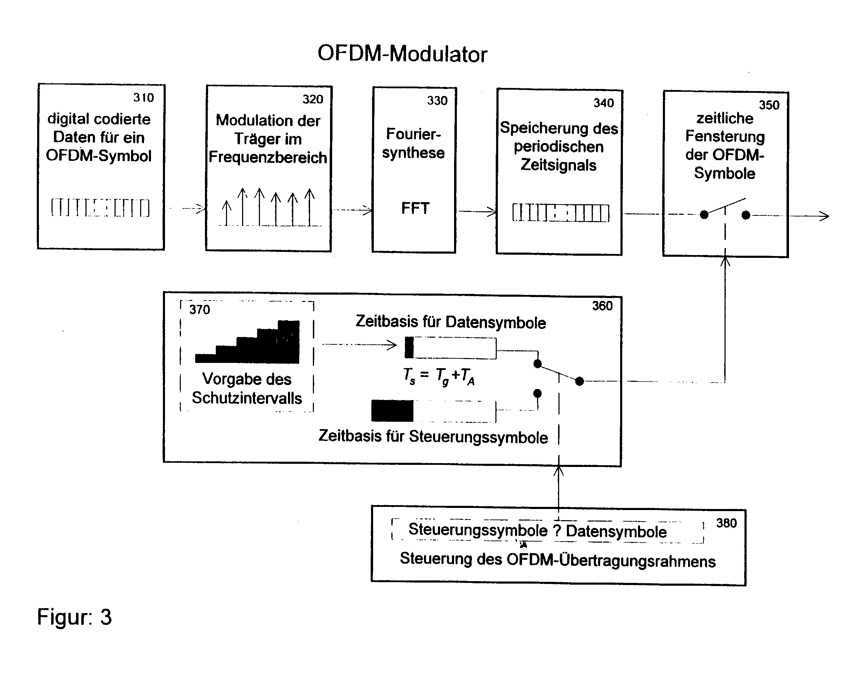

Figur 3 zeigt die wesentlichen Merkmale der sendeseitigen OFDM-Modulation. Für die Bildung eines OFDM-Symbols, das die kleinste Übertragungseinheit darstellt, wird ein Block digital codierter Daten 310 betrachtet. Diese werden im Frequenzbereich 320 auf eine Vielzahl von orthogonalen Trägern aufmoduliert. Dabei werden je Träger standardmäßige, digitale Modulationsverfahren (z.B. QPSK, QAM usw.) angewendet. Mittels einer inversen Fourier-Transformation 330 wird ein mit der Dauer *T*_{*A*} periodisches Zeitsignal synthetisiert. Dieses periodische Zeitsignal, das die gesamte Information des Datenblocks 310 beinhaltet und in Form von zwischengespeicherten Abtastwerten vorliegt 340, wird in ein analoges Signal gewandelt und für die Symboldauer *T*_{*S*} gesendet. Die Symboldauer *T*_{*S*} wird dabei größer gewählt als die minimal erforderliche aktive Symbolzeit *T*_{*A*} , die durch die Periodendauer bestimmt wird. Die Zeit, um die das gesendete Signal verlängert wird, bezeichnet man als Schutzintervall mit der Dauer *T*_{*g*} *=T*_{*S*} *- T*_{*A*}*.*

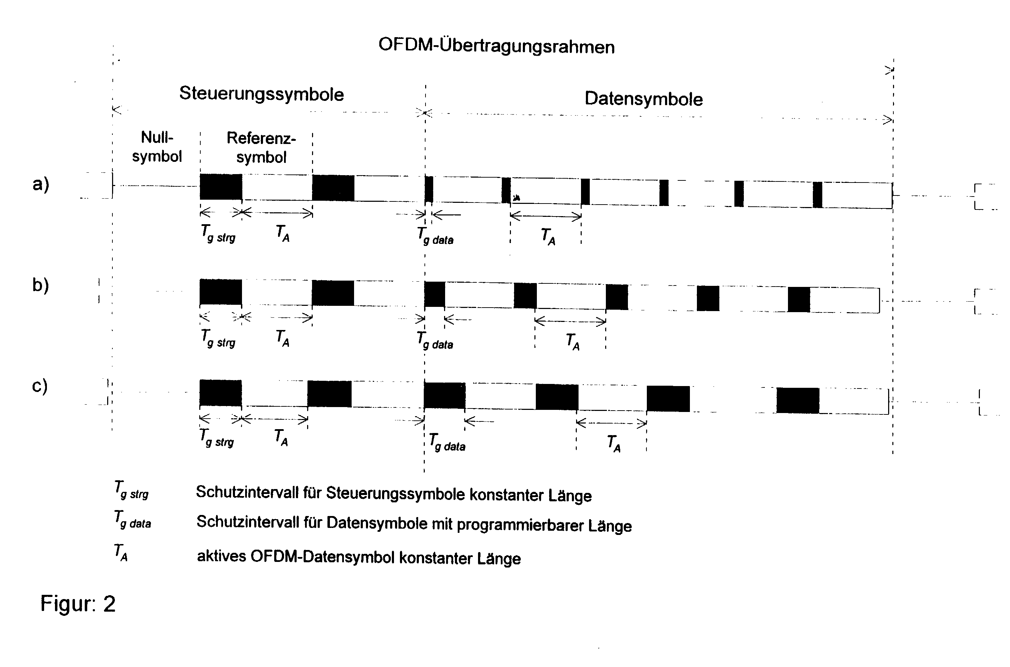

Erfindungsgemäß wird die Dauer des Schutzintervalls *T*_{*g strg*} für die Steuerungssymbole größer gewählt als das Schutzintervall *T*_{*g data*} für die Datensymbole. Dies wird durch eine Umschaltung 360 bewerkstelligt. die in Abhängigkeit von der Lage des OFDM-Symbols in dem OFDM-Übertragungsrahmen gesteuert wird. Das Schutzintervall *T*_{*g strg*} wird dabei so groß gewählt, daß ein Nebensprechen aufeinanderfolgender Steuerungssymbole selbst unter kritischen Bedingungen, wie sie in einem Gleichwellennetz mit großer Flächenausdehnung zu erwarten sind. ausgeschlossen werden kann. Das Schutzintervall *T*_{*g data*} , das aus einem Satz 370 verschiedener Schutzintervalle ausgewählt werden kann, ist so bemessen, daß bei den tatsächlich auftretenden Laufzeitunterschieden, die sich aus der im Einzelfall realisierten Sendernetzstruktur ergeben, kein wesentliches Nebensprechen zwischen aufeinanderfolgenden Datensymbolen auftritt. Die gewählte Dauer für die Schutzintervalle *T*_{*g data*} der Datensymbole läßt sich mit Hilfe der Steuerungssymbole signalisieren. Es enstehen somit OFDM-Übertragungsrahmen mit unterschiedlichem Schutzintervall, wie sie beispielsweise in Figur 2 a) bis c) dargestellt sind.

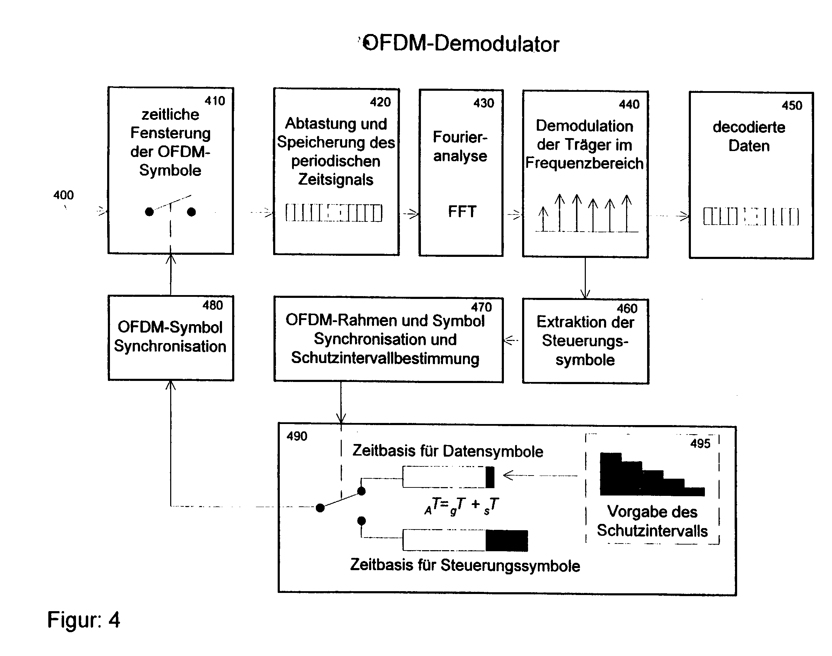

Empfangsseitig (siehe Figur 4) findet zunächst eine grobe Synchronisation auf den OFDM-Übertragungsrahmen statt. Innerhalb der Symboldauer *T*_{*S*} des ersten gesendeten OFDM-Symbols wird für die Periodendauer *T*_{*A*} das empfangene Zeitsignal 400 abgetastet 420 und mittels einer Fouriertransformation 430 im Frequenzbereich analysiert. Durch die Demodulation der einzelnen Träger werden die übertragenen Daten 450 gewonnen. Eine feine zeitliche Synchronisation ist in der Regel dadurch gegeben, daß das erste OFDM-Symbol ein Referenzsymbol darstellt, das eine Berechnung der Impulsantwort des Übertragungskanals ermöglicht und außerdem zur Gewinnung der Trägerfrequenzen in Betrag und Phase dient. Mit der Impulsantwort des Übertragungskanals sind alle Echos, die im Mehrwegekanal und im Gleichwellennetz innerhalb der Dauer des groß gewählten Schutzintervalls *T*_{*g strg*} auftreten, in ihrer Amplitude und Laufzeit bekannt.

Die Abtastung der folgenden OFDM-Symbole für eine Periodendauer *T*_{*A*} wird um die jeweiligen Schutzintervalle, deren Dauer für die Steuerungssymbole und die Datensymbole erfindungsgemäß durch die Steuerung 490 vorgegeben wird, in Abhängigkeit der Lage des OFDM-Symbols in dem Übertragungsrahmen verzögert. Die Dauer der Schutzintervalle *T*_{*g data*} für die Datensymbole wird zuvor signalisiert und aus einem Satz verschiedener möglicher Schutzintervalle 495 ausgewählt.

Der Vorteil des erfindungsgemäßen Verfahrens besteht darin, daß mit einem relativ geringen Hardware-Aufwand eine Flexibilität der Schutzintervalldauer geschaffen wird, die eine Optimierung des OFDM-Systems sowohl unter Realisierungs- als auch unter netzplanerischen Gesichtspunkten gestattet. Ein weiterer Vorteil des Verfahrens zeigt sich auch dann. wenn die Echo-Laufzeitunterschiede das für die Datensymbole vorgegebene Schutzintervall überschreiten. Solange die Steuerungssymbole mit einem ausreichend großen Schutzintervall versehen werden. ist eine zusätzliche Echo-Entzerrung für die Datensymbole aufgrund der über das Referenzsymbol bestimmten Impulsantwort des Übertragungskanals auch mit üblichen Verfahren möglich.

## Patentansprüche

1. Verfahren zur Vielträgermodulation (OFDM-Modulation) von digital codierten Daten, bei dem eine zeitliche Folge von OFDM-Symbolen erzeugt wird, welche in aufeinanderfolgende OFDM-Übertragungsrahmen strukturiert werden, wobei jeder OFDM-Übertragungsrahmen aus einem Rahmenkopf mit einem oder mehreren Steuerungssymbolen und einem Nutzdatenbereich mit einer Vielzahl von Datensymbolen besteht, und wobei zwischen aufeinanderfolgenden Steuerungsbzw. Datensymbolen jeweils ein Schutzintervall vorgesehen wird, **dadurch gekennzeichnet,** daß die Schutzintervalle für die Steuerungssymbole im Rahmenkopf jedes OFDM-Übertragungsrahmens größer gewählt sind als die Schutzintervalle für die Datensymbole im Nutzdatenbereich jedes OFDM-Übertragungsrahmens.

2. Verfahren nach Anspruch 1, **dadurch gekennzeichnet,** daß die zeitliche Länge der Schutzintervalle für die Datensymbole im Nutzdatenbereich jedes OFDM-Übertragungsrahmens variabel ist.

3. Verfahren zur Vielträgerdemodulation von gemäß Anspruch 1 oder 2 modulierten, digital codierten Daten, **dadurch gekennzeichnet,** daß die zeitliche Länge der Schutzintervalle für die Datensymbole im Nutzdatenbereich jedes empfangenen OFDM-Übertragungsrahmens bestimmt werden, und daß die Abtastzeitpunkte für die Daten symbole in Abhängigkeit von der festgestellten Länge der Schutzintervalle bestimmt werden.

## Claims

1. A method for multiple carrier modulation (OFDM modulation) of digitally coded data, wherein a time sequence of OFDM symbols is generated, which symbols are patterned into successive OFDM transmission frames, with each OFDM transmission frame being comprised of a frame head with one or several control symbols and a useful data range with a plurality of data symbols, and with respectively a guard interval being provided between successive control symbols or data symbols, **characterized in that** the guard intervals for the control symbols in the frame head of each OFDM transmission frame are selected to be larger than the guard intervals for the data symbols in the useful data range of each OFDM transmission frame.

2. A method according to claim 1, **characterized in that** the time length of the guard intervals for the data symbols in the useful data range of each OFDM transmission frame is variable.

3. A method for multiple carrier demodulation of digitally coded data modulated according to claim 1 or 2, **characterized in that** the time length of the guard intervals is determined for the data symbols in the useful data range of each received OFDM transmission frame and that the scanning moments for the data symbols are determined as a function of the detected length of the guard intervals.

## Revendications

1. Procédé à modulation multi-porteuse (modulation OFDM) de données codées sous forme numérique, procédé dans lequel : on engendre des symboles OFDM qui se suivent dans le temps, ces symboles étant structurés en des trames de transmission OFDM successives, chaque trame de transmission OFDM consiste en une tête de trame avec un ou plusieurs symboles de commande et en une zone de données utiles avec une pluralité de symboles de données, et un intervalle de protection est prévu à chaque fois entre les symboles successifs de données ou de commande, caractérisé en ce que, dans chaque trame de transmission OFDM, les intervalles de protection pour les symboles de commande dans la tête de trame sont choisis à une valeur plus grande que les intervalles de protection pour les symboles de données dans la zone de données utiles.

2. Procédé selon la revendication 1 caractérisé en ce que les durées des intervalles de protection pour les symboles de données dans les zones de données utiles de chaque trame de transmission OFDM sont variables.

3. Procédé pour la démodulation multiporteuse de données codées sous forme numérique et modulées selon la revendication 1 ou 2, caractérisé en ce qu'on détermine les durées des intervalles de protection pour les symboles de données dans la zone de données utiles de chaque trame de transmission OFDM reçue, et en ce qu'on détermine la durée de balayage pour les symboles de données en fonction des longueurs déterminées des intervalles de protection.
